# EUROPEAN PATENT SPECIFICATION

(11) **EP 3 098 134 B1**
(45) Date of publication and mention of the grant of the patent: **28.06.2017**
(21) Application number: 15169637.4
(22) Date of filing: 28.05.2015
(51) Int. Cl.: B62B 3/02, B60D 1/48, B62D 13/00, B62D 53/00

(54) **A TROLLEY COUPLING DEVICE, A TROLLEY AND A USE THEREOF**
WAGENKOPPLUNGSVORRICHTUNG, WAGEN UND VERWENDUNG DAVON
DISPOSITIF DE COUPLAGE DE CHARIOT, CHARIOT ET UTILISATION DE CELUI-CI

(43) Date of publication of application: 30.11.2016
(73) Proprietor: Helge Nyberg Aktiebolag, 523 90 Ulricehamn (SE)
(72) Inventor: KLASSON, Martin, 523 98 Hökerum (SE)
(74) Representative: Johansson, Lars E.

(56) References cited:
- DE-C- 850 112
- DE-C- 958 619
- FR-A1- 2 517 604

## Description

### FIELD OF INVENTION

The present invention relates in a first aspect to a trolley coupling device arranged to be mounted on a trolley, which coupling device includes connection means for connection to a complementary connection means of a second trolley, and which coupling device includes a stationary part arranged to be attached to the first trolley and a movable part provided with said connection means, which movable part is pivotable by a first pivot mechanism around a first pivot axis in a first operation mode and pivotable by a second pivot mechanism around a second pivot axis in a second operation mode, which pivot axes extend vertically through the stationary part and are located at a distance from each other.

The first operation mode is the angular position of the movable part relative to the stationary part when the trolley to which the coupling device is attached travels when turning in a first direction, and the second operation mode relates to turning in the opposite direction.

In second and third aspects, the invention relates to a trolley coupling system and to a trolley

In a fourth aspect, the invention relates to a use of the invented trolley.

### BACKGROUND OF INVENTION

In various applications train of trolleys are used for transportation of goods, such as storages, hospitals air ports etc. Normally an electric truck is the tractor, and may be integrated with the first trolley of the train. The trolley transports usually takes place in localities where the space for the travelling of the trolley trains is limited and where a lot of turnings of the train is required. A substantial aspect of rational trolley transport is the loading and unloading of the A trolley coupling device with all features of the preamble of claim 1 is known by DE 850 112 C. Traditionally, trolleys in a train are connected to each other by traction bars. This requires a substantial distance between each pair of trolleys in order to allow sharp turns. Therefore such a trolley train becomes much longer than the sum of the length of the trolleys. This is a drawback when driving the train in narrow spaces and when driving rearwards. Another drawback is that the walking distance when loading and unloading the trolleys is increased due to the distances between the trolleys.

In order to overcome these drawbacks it exist trolley couplings that reduce the distance between pair of trolleys. In such a trolley coupling one of the trolleys is provided with a coupling device that can be pivoted around two different vertical pivot axes, one adjacent each corner at one end of the trolley. The device is constructed such that when turning to the left, a movable part of the coupling device pivots in one direction, e.g. clockwise around the pivot axis at one of the corners. When turning to the right, the movable part pivots in the opposite direction around the pivot axis at the other corner.

In order to achieve this the known coupling device is provided with a complicated mechanism, requiring high manufacturing precision leading to high production cost in order to avoid failure during operation of the trolley train. This prior art coupling device is described in connection with the description of examples of the invention later in the application. The problems related to the prior art construction become more evident in the detailed description of that prior art.

### SUMMARY OF THE INVENTION

The object of the present invention is to attain coupling of trolleys based on the concept of two pivot axes for the coupling in order to minimize the distance between a pair of trolleys, and which overcomes the drawbacks related to prior art couplings of this kind.

According to the first aspect of the invention this object is met in that a trolley coupling device of the kind specified in the preamble of claim 1 includes the specific features in the characterizing portion of the claim. Thus, the first and second pivot mechanism and the movable part are located in the same horizontal plane. This means that at least one horizontal plane intersects these components and that they thus are located at least substantially on the same vertical level.

The invented coupling device gains from the advantages that are achieved with a coupling device having two pivot axes. By using this kind of coupling device the walking distance is reduced by several thousand steps during a day. By the specific features related to the pivot axes the shortcomings of existing device with two pivot axes are overcame. As a matter of fact the construction according to the present invention makes this kind of coupling device possible to apply in reality in a competitive way. This is mainly due to the position of the pivot mechanism at substantially the same vertical level. This eliminates the need for complicated arm systems to transfer the pivot movements to the movable part. It also reduces the need for a very precise manufacturing procedure. Due to the vertically relative positions of the pivot mechanisms in relation to each other and in relation to the movable part, practically no inclined forces appear. This contributes to a proper operation of the coupling device with low risk for failure.

In the present application the terms "vertical" and "horizontal" and "upper" and "lower" are defined by the position the coupling device has when mounted as intended on a trolley located on a vertical ground. This is valid everywhere in the application so far such a term does not appear in a context explicitly implying something else. By the "ends" of a trolley is meant the sides of the trolley that form the front or the rear as seen in its travel direction. The term "lateral" in the application refers to the direction of the trolley travelling, and thus relates to a direction perpendicular to the travelling direction.

In the application also the terms "stationary" and "movable" are used. Of course no part of a moving trolley train is stationary. However, in this application the term "stationary" is defined in relation to the trolley to which the coupling device is intended to be mounted, and "movable" means movable in relation to that trolley. By the "inside" of the coupling device is meant those side of the respective part that face each other when they are adjacent each other and are in parallel to each other.

According to a preferred embodiment of the invented coupling device, the two pivot mechanisms have the same vertical length and are located at the same vertical level.

This symmetrical arrangement contributes further to simplify the construction and to achieve an advantageous pattern of the appearing forces when the movable part pivots.

According to a further preferred embodiment, a horizontal plane located axially centrally between the ends of the first pivot mechanism as well as between the ends of the second pivot mechanism divides each of the parts substantially at the middle thereof as seen in the vertical direction.

This embodiment represents a further step to make the construction as symmetrical as possible, which further strengthens the advantages of the embodiment mentioned next above.

According to a further preferred embodiment, the pivot axes are arranged adjacent a respective lateral end of the stationary part.

This means that the distance between the pivot axes is as large as possible, within the width of the trolley. Thereby the advantages of the two pivot axis type coupling device is maximized since it allows to make the distance between the connected trolleys at a minimum.

According to a further preferred embodiment, the first pivot mechanism is attached to the stationary part and the second pivot mechanism is attached to the movable part.

This is a simple way to attain the two axis pivoting resulting in a relyable function and contribute to the symmetry of the coupling device.

According to a further preferred embodiment, each pivot mechanism includes a shaft rotationally journalled in a support attached to the respective part.

This represents a very simple and reliable pivot mechanism, contributing to a safe operation of the device.

According to a further preferred embodiment, the support includes one support unit adjacent each end of the shaft.

Supporting the shaft at each end in this way makes the journaling thereof particularly robust.

According to a further preferred embodiment, each pivot mechanism includes a sleeve arranged around the shaft between the pair of support units.

The sleeve allows a force to be applied to the shaft perpendicular to its axis via the sleeve, which is advantageous with regard to maintaining a proper position of the pivot mechanism relative to the related pivot axis.
According to a further preferred embodiment, the coupling device includes pressure applying means arranged to exert a pressure force against each of said sleeves, which pressure force is directed substantially perpendicular to the axis of the respective shaft.

By the pressure applying means a force will be applied to the shaft of the pivot mechanism thereby securing a proper position as mentioned next above. Preferably the pressure applying means includes a rod extending between the sleeves, whereby the construction becomes simple with one single unit pressing against both the sleeves.

According to a further preferred embodiment, each of the parts is provided with a rod receiving device arranged to receive said rod during a respective operation mode.

The rod receiving means is arranged to receive the rod of the pressure applying means when this means includes such a rod. The rod receiving means guides the rod to a proper position in the respective operation mode such that the force exerted on the sleeves is precisely directed.

According to a further preferred embodiment, each of the rod receiving means includes a generally U-shaped element mounted on the inside of the respective part adjacent the end thereof remote from the end where the pivot mechanism is mounted.

Such a U-shaped element will be well adapted to guide and hold the rod in position, and is a very simple element for reliable performing that task.

According to a further preferred embodiment, at least one of the parts is provided with a plurality of elastic blocks on the inside of the respective part.

By such elastic blocks it will in a simple way be possible to have a separating force between the parts when they are in the closed position, i.e. when they are adjacent each other and parallel. The separating force will contribute to initiate turning from the neutral, straight position.

According to the second aspect of the invention, the object is met in that a coupling system includes a first trolley coupling device according to the present invention, in particular according to any of the preferred embodiments thereof, which first coupling device is arranged to be mounted on a first trolley, and which system further includes a second trolley coupling device provided with complementary connection means and being arranged to be mounted on a second trolley, which coupling devices are connectable to each other, and which coupling device is arranged to be stationary relative to the second trolley and relative to the movable part of the first coupling device when the coupling system is mounted to the respective trolley and the trolleys are in operation.

According to the third aspect of the invention, the object is achieved in that a trolley is provided with a trolley coupling device according to the present invention, in particular to any of the preferred embodiments thereof.

According to the fourth aspect of the invention the object is met by a use of the invented trolley for transporting goods.

The invented coupling system, the invented trolley and the invented use have advantages similar kind as those of the invented coupling device and the preferred embodiments thereof. These advantages have been described above.

It is to be understood that further advantageous embodiments may be constituted by any possible combination of features of the mentioned preferred embodiments and by any possible combination of these features with features in the description of examples below.

### BRIEF DESCRIPTION OF THE DRAWINGS

Fig.1. Is a schematic view from above of a train of trolleys according to the invention when turning to the left.
Fig. 2 is a view corresponding to fig. 1 but illustrating turning to the right.
Fig. 3 is a perspective view of a coupling device according to prior art.
Fig. 4 is a view from above of an example of a coupling system according to the present invention.
Fig. 5 is a perspective view of a coupling device according to the present invention as seen in a direction corresponding to the arrow B in fig. 1.

### DESCRIPTION OF EXAMPLES

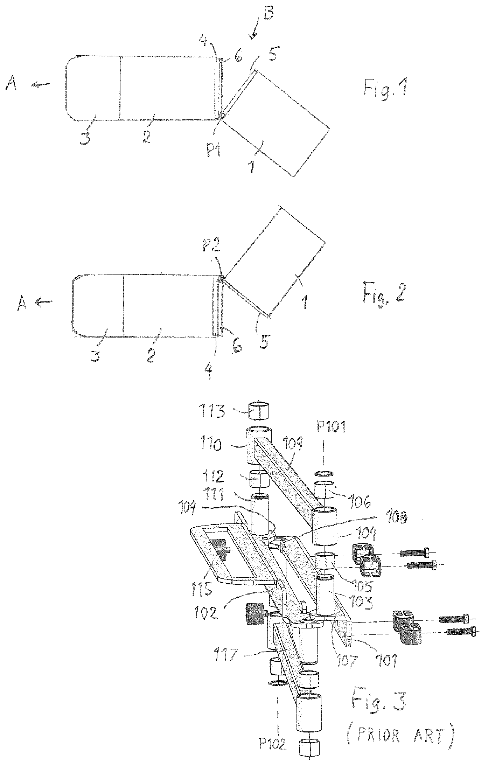

Fig. 1 and 2 in schematic views from above illustrate a type of coupling principle between trolleys, where turning a pair of trolleys to the left and to the right, respectively is effectuated around two different pivot axes. This is the type of coupling system to which the coupling device of the present invention relates.

Fig, 1 illustrates a train of trolleys consisting of a driving trolley 2 and a pulled trolley 1. The driving trolley 2 is provided with a driving platform 3 having an electric motor driving the trolley in direction of arrow A. The pulled trolley 1 is connected to the driving trolley 2 such that it is pulled from that trolley. The figure illustrates the train in a first operation mode, corresponding to turning leftwards. The pulled trolley 1 is connected to the driving trolley by a coupling system consisting of a first coupling device 5, 6 attached to the front end of the pulled trolley 1 and a second coupling device 4 attached to the rear end of the driving trolley 2.

The coupling device 5, 6 attached to the pulled trolley 1consists of a stationary part 6, attached to the trolley and a movable part 5. The movable part 5 is provided with connection means through which it is connected to complementary connection means of the coupling device 4 at the driving trolley. In the illustrated operation mode, i.e. a left turn, the movable part 5 pivots counter-clockwise around a first pivot axis P1 extending vertically adjacent the left front corner of the pulled trolley 1.

Fig. 2 illustrates the same trolley train in a second operation mode, corresponding to turning rightwards. When turning to the right the movable part 5 of the coupling device 5, 6 of the pulled trolley 1 is pivoted clockwise around a second pivot axis P2 that extends vertically adjacent the right front corner of the pulled trolley 1.

Of course the coupling system/device according to the present invention also may be applied to connect two pulled trolleys in case the train contains three or more trolleys.

Fig. 3 is a perspective view, partly as an explosion view, of a coupling device according to prior art for achieving the type of connection illustrated in figures 1 and 2. The figure illustrates the coupling device that has a stationary part and a movable part, i.e. corresponding to the coupling device 5, 6 in figures 1 and 2. The stationary part 101 is attached to the front end of a trolley. At each lateral end of the stationary part there is a horizontal flange 107, 108. On the upper side of the in the figure foremost flange 107 is mounted a shaft 103. A sleeve 104 is rotatable mounted on the shaft 103 by means of two bearing sleeves 105, 106. The shaft 103 defines a first pivot axis P101 around which an arm 109 attached to the sleeve 104 is pivotable. The other end of the arm is attached to a sleeve 110 rotatable mounted on a shaft 111 by means of two bearing sleeves 112, 113.The shaft 111 is attached to the upper side of a horizontal flange 114 on the movable part 102, at a lateral end thereof.

The movable part is provided with connection means 115, which are connectable to complementary connection means mounted on the rear end of another trolley in a trolley train.

At a left turn of the trolley train, the arm 109 will pivot around the pivot axis P101 in the counter-clockwise direction, thus reaching a position as illustrated in fig.1.

At the flange 108 of the stationary part 101, i.e. at the in the figure remote end of the stationary part, a downwardly directed shaft 116 is attached to the bottom side of the flange 108. The shaft 116 defines a second pivot axis P102. Around this axis the movable part 102 will pivot in the clockwise direction in case of turning to the right. The arrangement for this is similar to that described above for the counter-clockwise pivoting of the movable part. It thus includes an arm 117 connected at one end to the shaft 116 in the pivot axis P102 and at the other end to the movable part 102 via respective sleeve arrangements as described above.

The known device, however has serious drawbacks. This is mainly due to the fact that the pivoting mechanism for one rotational direction is located above the unit to be pivoted, i.e. the movable part, whereas the pivoting mechanism for the opposite rotational direction is located below the movable part. Furthermore, two additional pivot axes, in excess to the main pivot axes P101, P102, ae required for the device to function. The construction requires that all four pivot axes are parallel with a very high precision. The same is valid for the relative distances between the axes. The result is that the manufacturing of the device has to be done very carefully and precise in order to achieve that the device functions satisfactory. This construction also results in a problematic force pattern due to the different vertical location of the pivot mechanisms in relation to each other and to the movable part, such that unbalanced inclined forces will occur. This effect further increases the need for preciseness at manufacturing and the risk for problem at operation of the coupling device.

In the following a coupling device according to the present invention will be described.

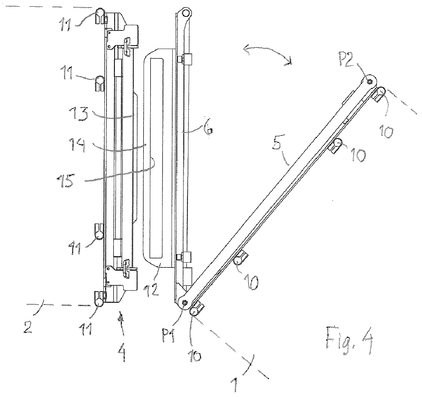

Fig. 4 in a view from above illustrates a coupling system according to the invention. The figure is a partial enlargement of fig. 1, with the difference that in fig. 4 the coupling devices 4 and 5, 6 of the coupling system are shown in an uncoupled position in order to make the figure more eligible. In this example thus trolley 2 is the driving trolley and trolley 1 is the pulled trolley. The coupling device 5, 6 is according to an example of the present invention. The stationary part 6 thereof is by means of four attachment units 10 attached to the trolley 1 and thus is stationary in relation thereto. At a lateral end of the stationary part 6 there is a first pivot axis P1, and at the other lateral end there is a second pivot axis P2. In this example the pivot axes P1, P2 are located adjacent a respective front corner of the trolley 1. It is, however, to be understood that the pivot axes may be located a short distance inwardly from the respective corner.

The movable part 5 of the coupling device is pivotable alternately around the respective pivot axes P1, P2, depending on the direction of the turn of the trolley train. In the figure illustrating a turn to the left the movable part pivots in the counter-clockwise direction during increasing turning angle, and of course in the opposite direction when the turning gradually returns to straight forward travelling. The possible angle of the pivoting may exceed 90° allowing very sharp turns. When turning to the right the upper end, as seen in the figure, of the movable part 5 will be located at the second pivot axis P2 to pivot around this, and the lower end of the movable part 5 is loosened from the position at the first pivot axis.

The coupling device of the fore-running trolley 2 is provided with attachment units 11 attached to this trolley.

On the front side of the movable part 5 is provided a connection means 12 through which the coupling device 5, 6 during travelling is connected to complementary connection means 13 on the coupling device 4 of the fore-running trolley 2. The connection means 12 in this example is a laterally elongated flange 14 with an elongated slit 15 therethrough. The connection means 13 of the other coupling device is arranged to fit into the slit 15 adjacent each end thereof resulting in a two-point connection, which is advantageous with regards to the force distribution and leads to a robust connection.

In the example illustrated in fig. 4, the coupling device 5, 6 according to the invention is located on the front end of the pulled trolley 1. As easily understandable, an opposite arrangement is within the scope of the invention, where the invented coupling device 5, 6 is mounted on the rear end of the fore-running trolley 2, and the other coupling device having the complementary connection means 12 is mounted on the front end of the pulled trolley 1.

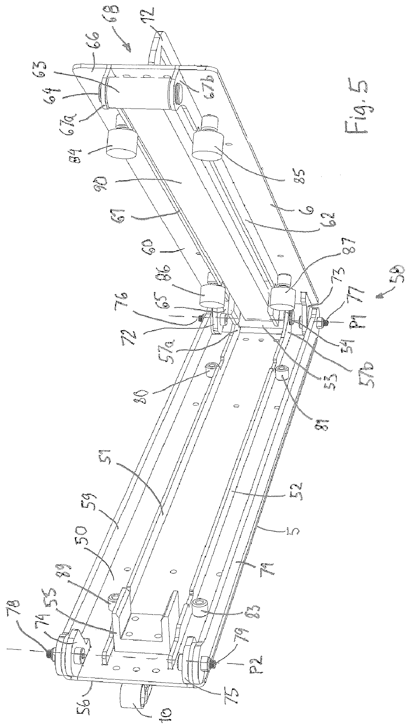

Fig. 5 is a perspective view of the coupling device 5, 6 as seen from the general direction of arrow B in fig. 1 and shows the cooperation between the stationary part 5 and the movable part 6. The view shows the insides 50 and 60 of the respective parts 5, 6, i.e. the side of the parts that face towards each other when the parts are in parallel at zero pivot angle. The insides 50, 60 of the two parts are to a large extent identical. The inside 50 of the stationary part has a first beam 51 and a second beam 52, both rigidly attached to the vertical plate 56 of the stationary part 5. The beams 51 and 52 are in parallel to each other and are perpendicular to the two pivot axes P1, P2. At the ends of the respective beam 51, 52 at the location of the first pivot axis, the beam is widened to form a respective support flange 57a and 57b for a first pivot mechanism 58. The pivot mechanism consists of a short shaft 54, rotatably journalled in holes (not visible) in the support flanges 57a and 57b. Between the support flanges 57a and 57b there is a cylindrical sleeve 53 around the shaft 54.

At the other lateral end of the movable part 5 is a rod receiving device 55 attached to the plate 56. The rod receiving device 55 is U-shaped with the opening facing towards the movable part 6. The U-shape is substantially rectangular. The outer end of each leg of the U-shaped device 55 is tapering at the inside thereof.

On the upper and lower edges of the plate 56 of the stationary part 5 there is a respective longitudinally extending stabilizing flange 59, 71 attached to the plate 56. At each end of both stabilizing flanges 57, 71 there is mounted a plate 72, 73, 74, 75. The plates 72, 73, 74,75 are rotatable around a respective bolt 76, 77, 78,79 extending through the respective ends of the stabilizing flanges 59,71 and the respective plates 72, 73, 74, 75. The bolts 76, 77 are aligned with the first pivot axis P1, and the bolts 78, 79 are aligned with the second pivot axis P2.

On the inside 50 of the stationary part 5 are also mounted four abutment units 80, 81, 82, 83 to the plate 56.

The inside of the movable part 6 is likewise provided with a pair of beams 61, 62 supporting a second pivoting mechanism 68 with a shaft 64 journalled in support flanges 67a, 67b and a sleeve 63 in a manner described above for the stationary part. There is also a rod receiving device 65 similar to that of the stationary part.

On the inside 60 of the movable part 6 are mounted four circular elastic blocks 84, 85, 86, 87, which are arrange to cooperate with the abutment units 80, 81, 82, 83 of the stationary part.

A pressure rod 90 is arranged to cooperate with the pivot mechanism 58, 68, and is in this figure momentary positioned on the movable part 6. The pressure rod 90 is located between the two sleeves 53, 63 of the respective pivot mechanism 58, 68. It exerts a pressure force against the sleeves 53, 63 pressing these against the respective shafts 54, 64. The pressure rod 90 thus is squeezed between the sleeves 53, 63 such that it is held in place by these. The pressure rod 90 will alternatingly be housed in the stationary part and in the movable part in dependence of the turning direction.

It is to be understood that the above described construction alternatively may be mirrored in the sense that the components on the inside 50 of the stationary part may be located on the inside 60 of the movable part and vice versa.

In operation the device will function as follows:
If the trolley train starts from a neutral straight position, the two parts 5,6 of the coupling device will be parallel to each other and both the pivoting mechanisms 58 and 68 will be aligned with the respective pivot axis P1, P2.

When the train starts to turn to the left as illustrated in fig. 5, the movable part 6 will start to pivot out from the stationary part 6 in the counter-clockwise direction around the pivot axis P1 as illustrated in the position. This is effectuated by the first pivot mechanism 58 as its shaft 54 rotates in its support flanges 57a, 57b. The pressure rod 90 follows the movement and is hold in place by the pressure against the sleeves 53, 56 and the rod receiving device 65 of the movable part.

When the train thereafter turns to the right the movable part 6 initially will be pivoted back to the neutral position, such that the second pivoting mechanism 68 will be aligned with the second pivot axis P2, simultaneously as the first pivoting mechanism 58 remain aligned with the first pivot axis P1. Further turning to the right leads to that the movable part 6 will pivot clockwise around the pivot axis P2. Pivoting is effectuated by the second pivot mechanism now 68 being aligned with the second pivot axis P2. When this movement starts, the pressure rod 90 that has been received by the rod receiving means 55 of the movable part will be kept in the position in the stationary part.

The rod receiving means 55, 65 contribute to guide the pressure rod 90 into a proper position parallel to a plane perpendicular to the pivot axes P1, P2. The elastic blocks 84, 85, 86, 87 on the movable part 6 abut the abutment units 80, 81, 82, 83, when the two parts 5, 6 are parallel and adjacent each other. Thereby a separating force is created. The elastic blocks also act as dampers when the device returns to the neutral straight position after turning.

## Claims

1. A trolley coupling device (5, 6) arranged to be mounted on one end of a first trolley (1), which coupling device (5, 6) includes connection means (12) for connection to a complementary connection means (13) of a second trolley (2), which coupling device (5, 6) includes a stationary part (5) arranged to be attached to the first trolley (1) and a movable part (6) provided with said connection means (12), which movable part (6) is pivotable by a first pivot mechanism (58) around a first pivot axis (P1) in a first operation mode and pivotable by a second pivot mechanism (68) around a second pivot axis (P2) in a second operation mode, which pivot axes (P1, P2) extend vertically through the stationary part (5) and are located at a distance from each other, **characterized in that** said first (58) and second (68) pivot mechanisms and said movable part (6) are located in the same horizontal plane.

2. A trolley coupling according to claim 1, wherein the two pivot mechanisms (58, 68) have the same vertical length and are located at the same vertical level.

3. A trolley coupling according to claim 2, wherein a horizontal plane located axially centrally between the ends of the first pivot mechanism (58) as well as between the ends of the second pivot mechanism (68) divides each of the parts (5, 6) substantially at the middle thereof as seen in the vertical direction.

4. A trolley coupling device according to any one of claims 1-3, wherein said pivot axes (P1, P2) are arranged adjacent a respective lateral end of the stationary part.

5. A trolley coupling device according to any one of claims 1-4, wherein the first pivot mechanism (58) is attached to the stationary part (5) and the second pivot mechanism (68) is attached to the movable part (6).

6. A trolley coupling device according to claim 5, wherein each pivot mechanism (58, 68) includes a shaft (54, 64) rotationally journalled in a support (57a, 57b, 67a, 67b) attached to the respective part.

7. A trolley coupling device according to claim 6, wherein said support (57a, 57b, 67a, 67b) includes one support unit adjacent each end of the shaft (54, 64).

8. A trolley coupling device according to claim 7, wherein each pivot mechanism (58, 68) includes a sleeve (53, 63) arranged around the shaft (54, 64) between the pair of support units (57a, 57b, 67a, 67b).

9. A trolley coupling device according to claim 8, including pressure applying means arranged to exert a pressure force against each of said sleeves (53, 63), which pressure force is directed substantially perpendicular to the axis of the respective shaft (54, 64), which pressure applying means preferably includes a rod (90) extending between said sleeves (53, 63).

10. A trolley coupling device according to claim 9, wherein each of said parts (5, 6) is provided with a rod receiving device (55, 65) arranged to receive said rod (90) during a respective operation mode

11. A trolley coupling device according to claim 10, wherein each of said rod receiving means (55, 65) includes a generally U-shaped element mounted on the inside (50, 60) of the respective part (5, 6) adjacent the end thereof remote from the end where the pivot mechanism is mounted.

12. A trolley coupling device according to any one of claims 1-11, wherein at least one of said parts (5, 6) is provided with a plurality of elastic blocks (84, 85, 86, 87) on the inside (50, 60) of the respective part.

13. A trolley coupling system including a first trolley coupling device (5, 6) according to any of claims 1-12 arranged to be mounted on a first trolley (1) and a second trolley coupling device (4) provided with complementary connection means (13) and being arranged to be mounted on a second trolley (2), said coupling devices (4, 5, 6) being connectable to each other and said second coupling device (4) being arranged to be stationary relative to the second trolley (2) and relative to the movable part (6) of the first coupling device (5, 6) when the coupling system is mounted to the respective trolley and the trolleys are in operation.

14. A trolley (1) provided with a trolley coupling device (5, 6) according to any of claims 1-12.

15. A use of a trolley (1) according to claim 14 for transporting goods.

## Patentansprüche

1. Trolley-Kopplungsvorrichtung (5, 6) eingerichtet an einem Ende eines ersten Trolleys (1) befestigt zu werden, wobei die Kopplungsvorrichtung (5, 6) ein Verbindungsmittel (12) zur Verbindung an ein komplementäres Verbindungsmittel (13) eines zweiten Trolleys (2) beinhaltet, wobei die Kopplungsvorrichtung (5, 6) ein stationäres Teil (5), das eingerichtet ist an dem ersten Trolley (1) angebracht zu werden, und ein bewegbares Teil (6), das mit dem Verbindungsmittel (12) versehen ist, beinhaltet, wobei das bewegbare Teil (6) in einem ersten Betriebsmodus durch einen ersten Schwenkmechanismus (58) um eine erste Schwenkachse (P1) schwenkbar ist, und in einem zweiten Betriebsmodus durch einen zweiten Schwenkmechanismus (68) um eine zweite Schwenkachse (P2) schwenkbar ist, wobei sich die Schwenkachsen (P1, P2) vertikal durch das stationäre Teil (5) erstrecken und sich in einem Abstand voneinander befinden, **dadurch gekennzeichnet, dass** sich der erste (58) und der zweite (68) Schwenkmechanismus und das bewegbare Teil (6) in der gleichen horizontalen Ebene befinden.

2. Trolley-Kopplungsvorrichtung gemäß Anspruch 1, wobei die zwei Schwenkmechanismen (58, 68) die gleiche vertikale Länge aufweisen und sich auf dem gleichen vertikalen Niveau befinden.

3. Trolley-Kopplungsvorrichtung gemäß Anspruch 2, wobei eine horizontale Ebene, die sich axial zentral zwischen den Enden des ersten Schwenkmechanismus (58) sowie zwischen den Enden des zweiten Schwenkmechanismus (68) befindet, jedes der Teile (5, 6), gesehen in der vertikalen Richtung, im Wesentlichen in der Mitte davon teilt.

4. Trolley-Kopplungsvorrichtung gemäß irgendeinem der Ansprüche 1-3, wobei die Schwenkachsen (P1, P2) benachbart eines entsprechenden seitlichen Endes des stationären Teils eingerichtet sind.

5. Trolley-Kopplungsvorrichtung gemäß irgendeinem der Ansprüche 1-4, wobei der erste Schwenkmechanismus (58) an dem stationären Teil (5) angebracht ist und der zweite Schwenkmechanismus (68) an dem bewegbaren Teil (6) angebracht ist.

6. Trolley-Kopplungsvorrichtung gemäß Anspruch 5, wobei jeder Schwenkmechanismus (58, 68) eine Welle (54, 64) beinhaltet, die drehbar in einer Abstützung (57a, 57b, 67a, 67b) gelagert ist, die an dem entsprechenden Teil angebracht ist.

7. Trolley-Kopplungsvorrichtung gemäß Anspruch 6, wobei die Abstützung (57a, 57b, 67a, 67b) eine Stützeinheit benachbart jedes Endes der Welle (54, 64) beinhaltet.

8. Trolley-Kopplungsvorrichtung gemäß Anspruch 7, wobei jeder Schwenkmechanismus (58, 68) eine Hülse (53, 63) beinhaltet, die um die Welle (54, 64) zwischen dem Paar von Stützeinheiten (57a, 57b, 67a, 67b) eingerichtet ist.

9. Trolley-Kopplungsvorrichtung gemäß Anspruch 8, beinhaltend ein Druckanwendungsmittel, das eingerichtet ist, eine Druckkraft auf jede der Hülsen (53, 63) auszuüben, wobei die Druckkraft im Wesentlichen senkrecht zu der Achse der entsprechenden Welle (54, 64) gerichtet ist, wobei das Druckanwendungsmittel vorzugsweise eine Stange (90) beinhaltet, die sich zwischen den Hülsen (53, 63) erstreckt.

10. Trolley-Kopplungsvorrichtung gemäß Anspruch 9, wobei jedes der Teile (5, 6) mit einer Stangenaufnahmevorrichtung (55, 65) versehen ist, die eingerichtet ist, die Stange (90) während eines entsprechenden Betriebsmodus aufzunehmen.

11. Trolley-Kopplungsvorrichtung gemäß Anspruch 10, wobei jedes der Stangenaufnahmemittel (55, 65) ein im Allgemeinen U-förmiges Element beinhaltet, dass an der Innenseite (50, 60) des entsprechenden Teils (5, 6) befestigt ist, benachbart eines Endes davon, entfernt von dem Ende, an dem der Schwenkmechanismus befestigt ist.

12. Trolley-Kopplungsvorrichtung gemäß irgendeinem der Ansprüche 1-11, wobei mindestens eines der Teile (5, 6) an der Innenseite (50, 60) des entsprechenden Teils mit mehreren elastischen Blöcken (84, 85, 86, 87) versehen ist.

13. Trolley-Kopplungssystem beinhaltend eine erste Trolley-Kopplungsvorrichtung (5,6) gemäß einem der Ansprüche 1-12, eingerichtet an einem ersten Trolley (1) befestigt zu werden, und eine zweite Trolley-Kopplungsvorrichtung (4), versehen mit einem komplementären Verbindungsmittel (13) und eingerichtet an einem zweiten Trolley (2) befestigt zu werden, wobei die Kopplungsvorrichtungen (4, 5, 6) miteinander verbindbar sind und die zweite Kopplungsvorrichtung (4) eingerichtet ist, stationär relativ zu dem zweiten Trolley (2) und relativ zu dem bewegbaren Teil (6) der ersten Kopplungsvorrichtung (5, 6) zu sein, wenn das Kopplungssystem an dem entsprechenden Trolley befestigt ist und sich die Trolleys in Betrieb befinden.

14. Trolley (1) versehen mit einer Trolley-Kopplungsvorrichtung (5, 6) gemäß einem der Ansprüche 1-12.

15. Verwendung eines Trolleys (1) gemäß Anspruch 14 zum Transportieren von Waren.

## Revendications

1. Un dispositif d'accouplement de chariots (5, 6) agencé pour être monté sur une extrémité d'un premier chariot (1), lequel dispositif d'accouplement (5, 6) comprend des moyens de liaison (12) pour une liaison à un moyen de liaison complémentaire (13) d'un deuxième chariot (2), lequel dispositif d'accouplement (5, 6) comprend une partie stationnaire (5) agencée pour être fixée au premier chariot (1) et une partie mobile (6) munie desdits moyens de liaison (12), laquelle partie mobile (6) est apte à pivoter au moyen d'un premier mécanisme de pivotement (58) autour d'un premier axe de pivotement (P1) dans un premier mode de fonctionnement et apte à pivoter au moyen d'un deuxième mécanisme de pivotement (68) autour d'un deuxième axe de pivotement (P2) dans une deuxième mode de fonctionnement, les axes de pivotement (P1, P2) s'étendant verticalement à travers la partie stationnaire (5) et étant situés à distance l'un de l'autre, **caractérisé en ce que** lesdits premier (58) et deuxième (68) mécanismes de pivotement et ladite partie mobile (6) sont situés dans le même plan horizontal.

2. Un dispositif d'accouplement de chariots selon la revendication 1, dans lequel les deux mécanismes de pivotement (58, 68) ont la même longueur verticale et sont situés au même niveau vertical.

3. Un dispositif d'accouplement de chariots selon la revendication 2, dans lequel un plan horizontal situé axialement centralement entre les extrémités du premier mécanisme de pivotement (58) ainsi qu'entre les extrémités du deuxième mécanisme de pivotement (68) divise chacune des parties (5, 6) sensiblement au milieu de celles-ci, vues dans la direction verticale.

4. Un dispositif d'accouplement de chariots selon l'une quelconque des revendications 1 à 3, dans lequel lesdits axes de pivotement (P1, P2) sont disposés de façon adjacente à une extrémité latérale respective de la partie stationnaire.

5. Un dispositif d'accouplement de chariots selon l'une quelconque des revendications 1 à 4, dans lequel le premier mécanisme de pivotement (58) est fixé à la partie stationnaire (5) et le deuxième mécanisme de pivotement (68) est fixé à la partie mobile (6).

6. Un dispositif d'accouplement de chariots selon la revendication 5, dans lequel chaque mécanisme de pivotement (58, 68) comprend un arbre (54, 64) tournant en rotation dans un support (57a, 57b, 67a, 67b) fixé à la partie respective.

7. Un dispositif d'accouplement de chariots selon la revendication 6, dans lequel ledit support (57a, 57b, 67a, 67b) comprend une unité de support adjacente à chaque extrémité de l'arbre (54, 64).

8. Un dispositif d'accouplement de chariots selon la revendication 7, dans lequel chaque mécanisme de pivotement (58, 68) comprend un manchon (53, 63) disposé autour de l'arbre (54, 64) entre les paires d'unités de support (57a, 57b, 67a, 67b).

9. Un dispositif d'accouplement de chariots selon la revendication 8, comprenant des moyens d'application de pression agencés pour exercer une force de pression contre chacun desdits manchons (53, 63), laquelle force de pression est dirigée sensiblement perpendiculairement à l'axe de l'arbre respectif (54, 64), lequel moyen d'application de pression comprend de préférence une tige (90) s'étendant entre lesdits manchons (53, 63).

10. Un dispositif d'accouplement de chariots selon la revendication 9, dans lequel chacune desdites parties (5, 6) est pourvue d'un dispositif (55, 65) de réception de tige agencé pour recevoir ladite tige (90) pendant un mode de fonctionnement respectif.

11. Un dispositif d'accouplement de chariots selon la revendication 10, dans lequel chacun desdits moyens (55, 65) de réception de tige comprend un élément généralement en forme de U monté à l'intérieur (50, 60) de la partie respective (5, 6), de façon adjacente à l'extrémité de celle-ci située à distance de l'extrémité au niveau de laquelle le mécanisme de pivotement est monté.

12. Un dispositif d'accouplement de chariots selon l'une quelconque des revendications 1 à 11, dans lequel au moins l'une desdites parties (5, 6) est pourvue d'une pluralité de blocs élastiques (84, 85, 86, 87) situés sur l'intérieur (50, 60) de la partie respective.

13. Un dispositif d'accouplement de chariots comprenant un premier dispositif d'accouplement de chariots (5, 6) selon l'une quelconque des revendications 1 à 12, agencé pour être monté sur un premier chariot (1), et un deuxième dispositif d'accouplement de chariots (4) pourvu de moyens de liaison complémentaires (13) et étant agencé pour être monté sur un deuxième chariot (2), lesdits dispositifs d'accouplement (4, 5, 6) étant aptes à être reliés l'un à l'autre et ledit deuxième dispositif d'accouplement (4) étant agencé pour être stationnaire par rapport au deuxième chariot (2) et par rapport à la partie mobile (6) du premier dispositif d'accouplement (5, 6) lorsque le système d'accouplement est monté sur le chariot respectif et que les chariots sont en service.

14. Un chariot (1) muni d'un dispositif d'accouplement de chariots (5, 6) selon l'une quelconque des revendications 1 à 12.

15. Utilisation d'un chariot (1) selon la revendication 14 pour le transport de marchandises.
